# EUROPEAN PATENT SPECIFICATION

(11) **EP 2 404 792 B1**
(45) Date of publication and mention of the grant of the patent: **25.12.2013**
(21) Application number: 10748609.4
(22) Date of filing: 12.02.2010
(51) Int. Cl.: B60R 25/10, B62J 27/00

(54) **ABNORMALITY DETECTION AND VEHICLE TRACKING DEVICE**
FESTSTELLUNG VON ABNORMALITÄTEN UND FAHRZEUGORTUNGSVORRICHTUNG
DISPOSITIF DE DÉTECTION D'ANOMALIES ET DE SUIVI DE VÉHICULE

(30) Priority: 06.03.2009 JP 2009054208; 06.03.2009 JP 2009054209
(43) Date of publication of application: 11.01.2012
(73) Proprietor: Honda Motor Co., Ltd., Minato-ku Tokyo 107-8556 (JP)
(72) Inventor: KONNO Takeshi, Wako-shi Saitama 351-0193 (JP); HIRAKATA Yoshiaki, Wako-shi Saitama 351-0193 (JP)
(74) Representative: Quinterno, Giuseppe
(86) International application number: PCT/JP2010/052063
(87) International publication number: WO 2010/101013

(56) References cited:
- EP-A2- 0 780 820
- EP-A2- 1 247 706
- WO-A2-2007/057895
- JP-A- 10 295 044
- JP-A- 11 334 666
- JP-A- 2007 170 953

## Description

### Technical Field

The present invention relates to an abnormality sensing and vehicle tracking apparatus, and particularly to an abnormality sensing and vehicle tracking apparatus that sets off an alarm when external force applied to a vehicle body while a driver or rider is away from the vehicle, of the kind defined in the preamble of claim 1.

### Background Art

Conventionally, an abnormality sensing apparatus that senses external force applied to a parked vehicle body to set off an alarm or disable engine starting has been known. Such an abnormality sensing apparatus is driven by electrical power supplied from an in-vehicle battery, and therefore, an alarm function thereof is disabled to work when the battery is dead.

In Japanese Unexamined Patent Application Publication No. 10-169269, there is disclosed an abnormality sensing apparatus in which an alert status is released when a code signal in a transmission radio wave from a mobile transmitter is correctly cross-checked. The abnormality sensing apparatus having a configuration in which a standby current for always allowing to receive code signals is not made to flow, but an electric current necessary for receiving and cross-checking code signals only during a given time after a predetermined switch is operated is made to flow, so as to reduce consumption of its battery while the vehicle is parked.

Conventionally, an abnormality sensing apparatus that determines that an abnormality has occurred in a predetermined article on the basis of an output value from a vibration sensor installed on the article to set off an alarm has been known.

In Japanese Patent Publication No. 3163242, there is disclosed an abnormality sensing apparatus which is installed on a portable article such as a personal computer, the abnormality sensing apparatus having a configuration in which a moving distance of the article is estimated on the basis of an output interval of signal outputs from a vibration sensor, and it is determined that the article is in an abnormal state when the moving distance exceeds a predetermined value.

An abnormality sensing and vehicle tracking apparatus of the initially defined kind is disclosed in document EP 0 780 820 A2.
This prior apparatus comprises a microcomputer connected by a power-supply wire to a main battery, an electric sound generator driven by the microcomputer, a detecting device for detecting disconnection of the power-supply wire, an integrated auxiliary battery connected to the microcomputer and the sound generator. A transistor cuts power supply to the microcomputer from the auxiliary battery when the system is not on the watch. If access to the vehicle compartment or wire-disconnection is detected while the system is on the watch, the microcomputer drives the sound generator to give an alarm.

### Summary of Invention

### Technical Problem

In an abnormality sensing apparatus which is equipped with an internal power supply separately independent of an in-vehicle battery, so as to be capable of continuously driving even in a case where the in-vehicle battery is removed while a vehicle is parked, it is determined that a rapid voltage reduction when the in-vehicle battery is removed is an abnormality in the vehicle to be able to activate warning means.

However, in a case where a vehicle equipped with such an abnormality sensing apparatus is a vehicle having a kick starter or a manual transmission system vehicle which can be push-started, it is possible to start its engine even in a state in which its in-vehicle battery is dead. Then, when the engine is started in a state in which the battery is dead, and thereafter, the ignition switch is switched off after driving of the vehicle, electrical power supply from a generator is stopped at the same time as stopping of the engine, that leads to a rapid reduction in the measurement value of battery voltage. Thereby, the abnormality sensing apparatus as described above may determine that the vehicle is in an abnormal state in which the in-vehicle battery is removed to activate its warning means regardless of a state in which a user merely switches off the ignition switch.

Further, the abnormality sensing apparatus described in said Japanese Patent Publication is to judge an abnormality according to a moving distance of an article from a point in time when sensing vibrations, and is a system premised on a commercial product which can always be found in a shop, that has not been suitable for system applied to a vehicle. A system for a vehicle which is capable of detecting an abnormality before moving the vehicle and has little false sensing is preferable.

An object of the present invention is to provide an improved abnormality sensing and vehicle tracking apparatus with little false activation and false sensing while improving the certainty of determination of an abnormal state based on vibrations applied to a vehicle body.

### Solution to Problem

The present invention achieves the above objects by an abnormality sensing and vehicle tracking apparatus having the features defined in claim 1.

According to a first, main feature of the present invention in a case where the battery voltage is reduced to a predetermined voltage or less within a predetermined time after the ignition switch that switches on and off the main power supply of the vehicle is switched off, the operational mode switching means does not determine that the vehicle is in an abnormal state, and on the other hand, in a case where the battery voltage is reduced to the predetermined voltage or less after a predetermined time has elapsed, and a reduction rate of the battery voltage is higher than or equal to a predetermined value, the operational mode switching means determines that the vehicle is in an abnormal state, and switches the operational mode to the theft alarm mode.

The present invention has a second feature in that in a case where the battery voltage is reduced to the predetermined voltage or less after a predetermined time has elapsed, and a reduction rate of the battery voltage is less than the predetermined value, the operational mode switching means determines that the vehicle is not in an abnormal state, and does not switch the operational mode.

The present invention has a third feature in the abnormality sensing and vehicle tracking apparatus comprising the internal power supply that causes the abnormality sensing and vehicle tracking apparatus to continuously drive when the battery voltage of the in-vehicle battery is reduced to a predetermined value or less.

The present invention has a fourth feature in that the abnormality sensing and vehicle tracking apparatus which senses an abnormal state of the vehicle with abnormality sensing means including a vibration sensor that senses vibrations applied to the vehicle, and further has a vehicle tracking function, the apparatus comprising: measuring means for measuring a sensing interval and the number of times of sensing of the vibrations; and abnormal state determining means for determining an abnormal state of the vehicle on the basis of an output signal from the vibration sensor, wherein the abnormal state determining means memorizes a plurality of predetermined patterns which are composed of combinations of sensing intervals and numbers of times of sensing of the vibrations, and determines an abnormal state of the vehicle according to a corresponding pattern.

The present invention has a fifth feature in comprising: an in-vehicle telephone set which is capable of performing wireless communication via a public telephone line; and a communication control unit which is capable of giving notice to the outside that the vehicle is in an abnormal state by use of the in-vehicle telephone set when it is determined by the abnormal state determining means that the vehicle is in an abnormal state.

The present invention has a sixth feature in that one of the predetermined patterns is that it is repeated three times that vibrations over a predetermined value are sensed once within five minutes after first sensing vibrations over the predetermined value.

The present invention has a seventh feature in that one of the predetermined patterns is that it is repeated twice that vibrations over a predetermined value are sensed once for a time from five minutes to ten minutes after first sensing vibrations over the predetermined value.

The present invention has an eighth feature in that one of the predetermined patterns is that vibrations over a predetermined value are sensed continuously for ten minutes or more.

### Advantageous Effects of Invention

In an apparatus according to the invention, the operational mode switching means switches the operational mode to the theft alarm mode according to a drop in the level of the battery voltage when an ignition switch that switches on and off a main power supply of the vehicle is switched off. Therefore, it is possible to sense an abnormal case when the in-vehicle battery is removed and set off an alarm with the internal power supply of the abnormality sensing and vehicle tracking apparatus, and it is judged whether or not the system sets off an alarm according to a degree of the battery voltage reduction when the ignition switch is switched off. Accordingly, an abnormality is not detected only due to a reduction in battery voltage when the ignition switch is switched off after driving of the vehicle when the battery is dead, which makes it possible to prevent an unnecessary alarm.

Furthermore, according to said first; main feature, in a case where the battery voltage is reduced to a predetermined voltage or less within a predetermined time after the ignition switch that switches on and off the main power supply of the vehicle is switched off, the operational mode switching means does not determine that the vehicle is in an abnormal state, and on the other hand, in a case where the battery voltage is reduced to the predetermined voltage or less after a predetermined time has elapsed, and a reduction rate of the battery voltage is higher than or equal to a predetermined value, the operational mode switching means determines that the vehicle is in an abnormal state, and switches the operational mode to the theft alarm mode. Therefore, by setting the predetermined time to an extremely short time (for example, twenty seconds), it is possible to judge whether the vehicle is in a state in which the ignition switch is switched off in a state in which the in-vehicle battery is dead, or in an abnormal state in which the in-vehicle battery is removed while the vehicle is parked, to carry out different control.

Thereby, in a vehicle whose engine can be started by a kick starter or push-started even in a case where the in-vehicle battery is dead, it is possible to prevent the warning means from being activated due to determination that the vehicle is in an abnormal state immediately after the ignition switch is switched off to stop the engine. Further, in a case where the in-vehicle battery is removed while the vehicle is parked after a sufficient time has elapsed after the ignition switch is switched off, the apparatus is capable of accurately determining that the vehicle is in an abnormal state.

According to the second feature, in a case where the battery voltage is reduced to the predetermined voltage or less after a predetermined time has elapsed, and a reduction rate of the battery voltage is less than the predetermined value, the operational mode switching means determines that the vehicle is not in an abnormal state, and does not switch the operational mode. Therefore, it is possible to prevent the apparatus from determining that the vehicle is in an abnormal state erroneously in a case where the battery voltage is slowly lowered due to natural discharge after the ignition switch is switched off.

According to the third feature, the internal power supply that causes the abnormality sensing and vehicle tracking apparatus to continuously drive when the battery voltage of the in-vehicle battery is reduced to a predetermined value or less is comprised. Therefore, it is possible to continuously drive the abnormality sensing and vehicle tracking apparatus even in a case where the in-vehicle battery is dead or in a case where the in-vehicle battery is removed while the vehicle is parked.

According to the fourth feature, the abnormal state determining means memorizes a plurality of predetermined patterns which are composed of combinations of sensing intervals and numbers of times of sensing of the vibrations, and determines an abnormal state of the vehicle according to a corresponding pattern. Therefore, not only is it possible to prevent the system from being false-activated only when temporal vibrations are sensed such as a case where a passerby happens to touch the vehicle body by mistake, but also it is possible to improve the accuracy of abnormality sensing because abnormal states are memorized as the plurality of patterns.

According to the fifth feature, a communication control unit which is capable of giving notice to the outside that the vehicle is in an abnormal state by use of the in-vehicle telephone set when it is determined by the abnormal state determining means that the vehicle is in an abnormal state is comprised. Therefore, when it is determined that the vehicle is in an abnormal state, it is possible to give notice of the vehicle being in an abnormal state to a mobile telephone, a personal computer, or the like of a user. Further, provided that location information by the in-vehicle GPS is notified in this communication, it is possible to know a travel history before and after the vehicle is brought into an abnormal state. Moreover, provided that a vibration pattern with which it is determined that the vehicle is in an abnormal state is notified, it is possible for a user or the like to infer its cause.

According to the sixth feature, one of the predetermined patterns is that it is repeated three times that vibrations over a predetermined value are sensed once within five minutes after first sensing vibrations over the predetermined value. Therefore, it is possible to securely sense that the vehicle is in an abnormal state on the basis of vibrations caused due to the removing work being continued even in a case where exterior components or the battery are removed.

According to the seventh feature, one of the predetermined patterns is that it is repeated twice that vibrations over a predetermined value are sensed once for a time from five minutes to ten minutes after first sensing vibrations over the predetermined value. Therefore, it is possible to securely sense that the vehicle is in an abnormal state on the basis of vibrations caused due to the work being continued, for example, even in a case of releasing a chain-lock for connecting the vehicle to a column or the like or a bar-lock for disabling the wheel to rotate.

According to the eighth feature, one of the predetermined patterns is that vibrations over a predetermined value are sensed continuously for ten minutes or more. Therefore, it is possible to securely sense that the vehicle is in an abnormal state on the basis of vibrations during transportation, for example, even in a case where the vehicle is immediately loaded on a truck or the like for transportation.

### Brief Description of Drawings

Fig. 1 is a schematic diagram showing a communication system of an abnormality sensing apparatus (which will be hereinafter shown as an abnormality sensing and vehicle tracking apparatus) according one embodiment of the present invention.
Fig. 2 is a block diagram showing the configuration of the abnormality sensing apparatus according to the present embodiment and peripheral devices thereof.
Fig. 3 is a time chart showing a flow at the time of conducting failure diagnosis processing for the abnormality sensing apparatus by use of the telephone set.
Fig. 4 is a circuit diagram of the abnormality sensing apparatus according to the present embodiment and peripheral devices thereof.
Fig. 5 is a time chart showing a flow of a failure diagnosis in a case where the check coupler is used.
Fig. 6 is a block diagram showing the configuration of operational mode switching means.
Fig. 7 is a state transition diagram showing the configuration of operational mode switching control.
Fig. 8 a flowchart showing a flow of battery voltage monitoring control performed in the operational mode switching means.
Fig. 9 is a time chart corresponding to a case where the in-vehicle battery is completely dead.
Fig. 10 is a time chart corresponding to a case where the in-vehicle battery is not yet dead, but weakening.
Fig. 11 is a time chart showing a relationship between vibrations applied to the vehicle body and abnormal state determination.

### Description of Embodiments

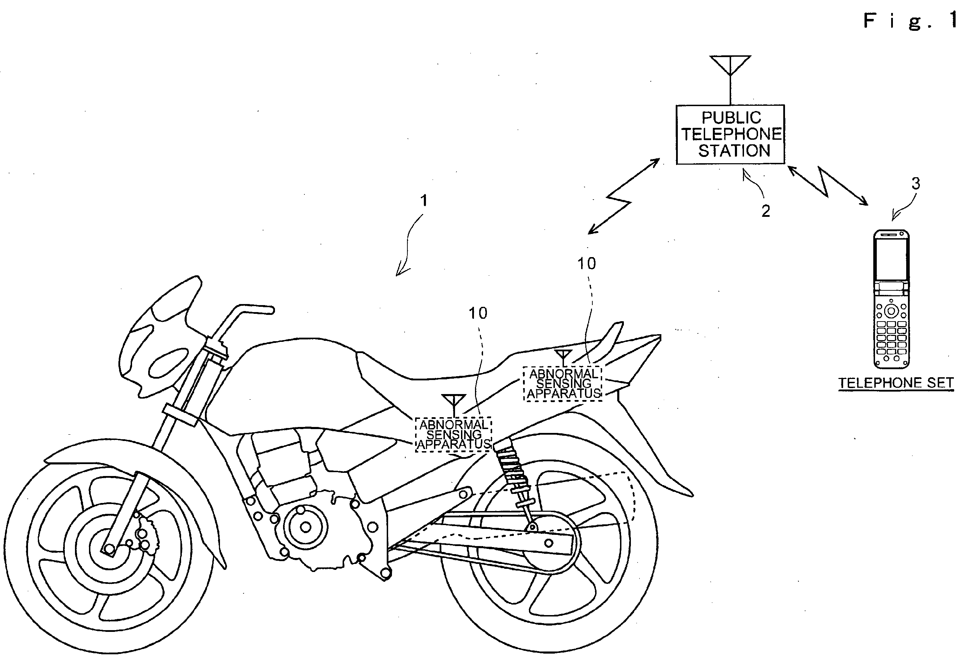

A preferred embodiment of the present invention will be described below in detail with reference to the drawings. Fig. 1 is a schematic diagram showing a communication system of an abnormality sensing and vehicle tracking apparatus (which will be hereinafter shown as an abnormality sensing apparatus) according one embodiment of the present invention. An abnormality sensing apparatus 10 that senses an abnormal state of a vehicle to give a warning is installed on a motorcycle 1. The abnormality sensing apparatus 10 is configured to determine that the vehicle is in an abnormal state when a signal over a predetermined value is output from an acceleration sensor or the like installed on the vehicle body while the vehicle is parked, to give a warning by activating a horn, lamps, or the like of the vehicle.

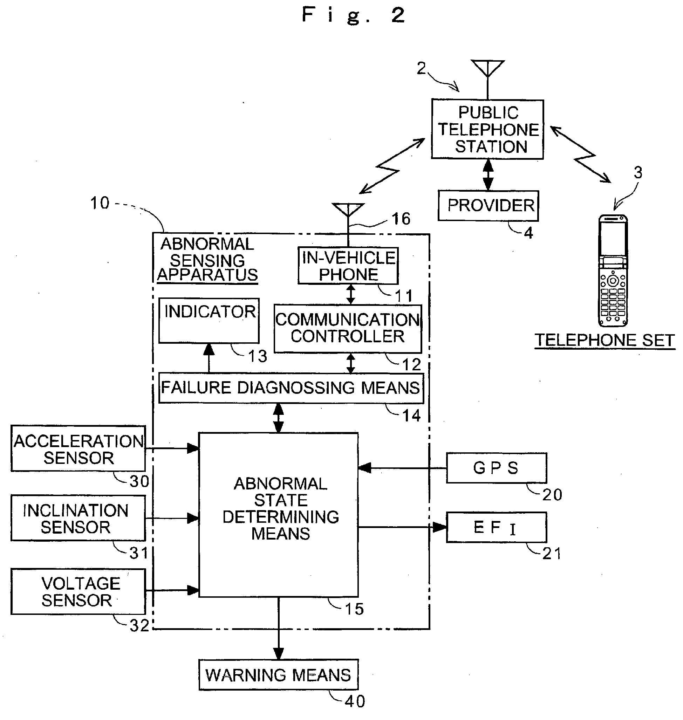

The abnormality sensing apparatus 10 is equipped with an in-vehicle transceiver such as a telephone set (refer to Fig. 2) capable of performing communication with a public telephone station 2. Therefore, it is possible to make a telephone call from the telephone set 3 to the abnormality sensing apparatus 10 via the public telephone station 2. The telephone set 3 may be a mobile telephone or a fixed-line telephone capable of accessing the public telephone station 2. In the present embodiment, GSM (Global System for Mobile Communications) that is the standard for mobile telephones is applied as the communication standard for an in-vehicle telephone set 11 on the abnormality sensing apparatus 10, and therefore, it is possible to make a telephone call to the abnormality sensing apparatus 10 from the telephone set 3 in many countries operating GSM.

Fig. 2 is a block diagram showing the configuration of the abnormality sensing apparatus 10 according to the present embodiment and peripheral devices thereof. The abnormality sensing apparatus 10 is covered with a three dimensional resin case, for example, size of approximately 100 mm x 100 mm x 20 mm, and that is a control device without operating means such as any switches. The abnormality sensing apparatus 10 is disposed at a position to which it is not easy for a third person to access, for example, under a seat of a motorcycle, or under a fuel tank. The abnormality sensing apparatus 10 includes an in-vehicle telephone set 11 equipped with a transmitting and receiving antenna 16 for performing communication with the public telephone station 2, a communication control unit 12 that performs at least an analysis of a transmitting and receiving signal by the in-vehicle telephone set 11, failure diagnosing means 14 that diagnoses the presence or absence of a failure in the abnormality sensing apparatus 10, indicating means 13 that indicates at least a diagnosis result which is yielded by the failure diagnosing means 14, and abnormal state determining means 15 that determines an abnormal state of the vehicle on the basis of output signals from the sensors 30, 31 and 32. The in-vehicle telephone set 11 may be provided outside the abnormality sensing apparatus 10. Further, the communication control unit 12 may be set so as to deny access from telephones other than a predetermined telephone set registered therewith in advance.

In order to perform wireless communication by the in-vehicle telephone set 11, it is necessary for an owner of the vehicle to conclude a communications contract with a network service provider 4. It is possible for the owner of the vehicle to arbitrarily choose whether or not to conclude a communications contract with the provider 4. The abnormality sensing apparatus 10 can be used as a typical abnormality sensing apparatus that activates warning means 40 on the basis of vibrations or the like caused by force applied externally to the vehicle body even in a case where a user has not concluded a communications contract with the provider 4. Hereinafter, cases where communications through the in-vehicle telephone set 11 are performed will be described as cases where a communications contract with the provider 4 is concluded.

Output signals from the acceleration sensor 30 that senses vibrations or the like applied to the vehicle body, an inclination sensor 31 that senses an angle of inclination to the front and back, and the right and left of the vehicle body, and a voltage sensor 32 that detects a change in battery voltage for monitoring access to a power supply circuit for example are input to the abnormal state determining means 15. The abnormal state determining means 15 determines that the vehicle is in an abnormal state, for example, when at least one of the output signals from the sensors 30, 31 and 32 exceeds a predetermined value. The abnormality sensing apparatus 10 is configured to be able to transmit that an abnormal state is sensed to the telephone set 3 remotely located from the vehicle via the in-vehicle telephone set 11. At this time, a clock time at which the abnormal state is sensed and a type of the activated sensor, and the like can be indicated on a display serving as indicating means of the telephone set 3.

A GPS (Global Positioning System) 20 is connected to the abnormal state determining means 15. The GPS 20 is used for the operation of an in-vehicle navigation system during typical driving of the vehicle. Meanwhile, the GPS 20 connected to the abnormality sensing apparatus 10 according to the present embodiment is configured to be able to be utilized, in case of occurrence of an abnormality, for a vehicle tracking function of transmitting an actual location of the vehicle, a travel history from a time of occurrence of an abnormality, or the like to the telephone set 3 via the in-vehicle telephone set 11.

An EFI (electronically-controlled fuel injector) 21 as an engine controller to be connected to the abnormal state determining means 15 is configured to be able to stop its driving when the abnormal state is detected according to an instruction from the abnormal state determining means 15. Therefore, it is possible to automatically stop the EFI 21 to disable the vehicle to be driven in case of occurrence of an abnormality. The stopping of the EFI 21 may be arbitrarily carried out by an operation of the telephone set 3. The engine controller controlled according to an instruction from the abnormal state determining means 15 may be an ignition system for spark plugs, various types of actuators, or the like.

The abnormality sensing apparatus 10 according to the present embodiment diagnoses whether or not the abnormality sensing apparatus 10 is normally functioning by the failure diagnosing means 14. That is, it is possible to conduct a self failure diagnosis for the abnormality sensing apparatus 10. The failure diagnosing means 14 is capable of sensing a state where it is impossible for the abnormal state determining means 15 having trouble to determine its abnormality even when every the sensors output signals over the predetermined value. Moreover, the failure diagnosing means 14 is capable of diagnosing a state in which output signals from every the sensors are not normally input, failures in the sensors themselves, and the like. The failure diagnosing means 14 is set to indicate type of a failure, a coping strategy, and the like on the indicating means 13 when such a failure is sensed.

In accordance with the configuration as described above, it is possible for a maintenance person for the vehicle to make a telephone call from the telephone set 3 to the abnormality sensing apparatus 10 to conduct a failure diagnosis for the abnormality sensing apparatus 10, and to know a diagnosis result thereof on the indicating means 13. A light-emitting diode (LED), a liquid-crystal screen, or the like may be applied to the indicating means 13.

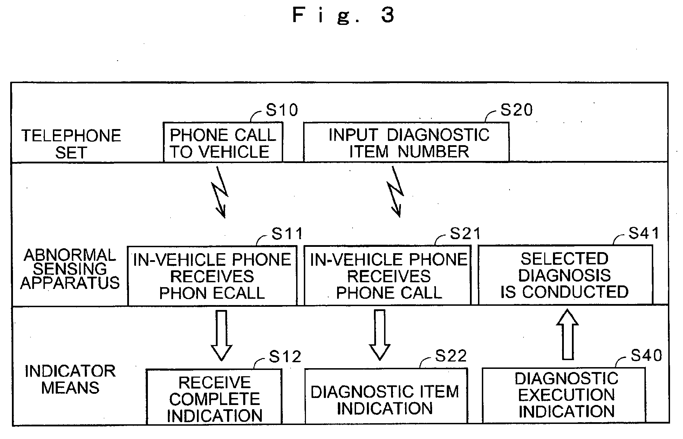

Fig. 3 is a time chart showing a flow at the time of conducting self failure diagnosis processing for the abnormality sensing apparatus 10 by use of the telephone set 3. When a maintenance person for the vehicle makes a telephone call from the telephone set 3 to the abnormality sensing apparatus 10 in step S10, the in-vehicle telephone set 11 of the abnormality sensing apparatus 10 receives the telephone call in step S11. In the following step S12, completion of the reception is indicated on the indicating means 13. Thereby, it is possible for the maintenance person for the vehicle to check visually that the telephone line is connected. The procedure for making a telephone call to the abnormality sensing apparatus 10 in the aforementioned step S10 can be carried out by dialing a telephone number unique to the in-vehicle telephone set 11 from a fixed-line telephone, a mobile telephone, or the like.

Next, in step S20, a number representing each diagnostic item (for example, numerals 1 to 5) is input to the telephone set 3. The diagnostic items may be composed of contents such as whether there is not a short-circuit in the circuit composing the abnormality sensing apparatus 10, and whether or not the sensors 30, 31 and 32 are normally functioning. In the following step S21, the in-vehicle telephone set 11 receives the input diagnostic item, and in step S22, the diagnostic item input to the indicating means 13 is indicated. Then, in step S40, it is indicated on the indicating means 13 that a failure diagnosis is conducted. In step S41, a failure diagnosis instruction signal for starting a failure diagnosis is output from the communication control unit 12, and a failure diagnosis for the selected diagnostic item is conducted by the failure diagnosing means 14.

As described above, in accordance with the abnormality sensing apparatus 10 according to the present embodiment, it is possible to conduct a failure diagnosis for the abnormality sensing apparatus 10 by an operation of the telephone set 3. Typically, when a self-diagnosis function is provided to the abnormality sensing apparatus 10 so as not to require a dedicated device for conducting a failure diagnosis, input means such as a switch for switching from a state in a typical abnormality sensing mode to a failure diagnosis mode in which the function of the abnormality sensing apparatus is temporarily suspended is required. Contrary to this, in accordance with the abnormality sensing apparatus 10 according to the present embodiment, because there is no need to provide input means which may be operated by a third person, it is possible to conduct a failure diagnosis for the abnormality sensing apparatus in a simple method, and to maintain a high abnormality sensing effect of the abnormality sensing apparatus.

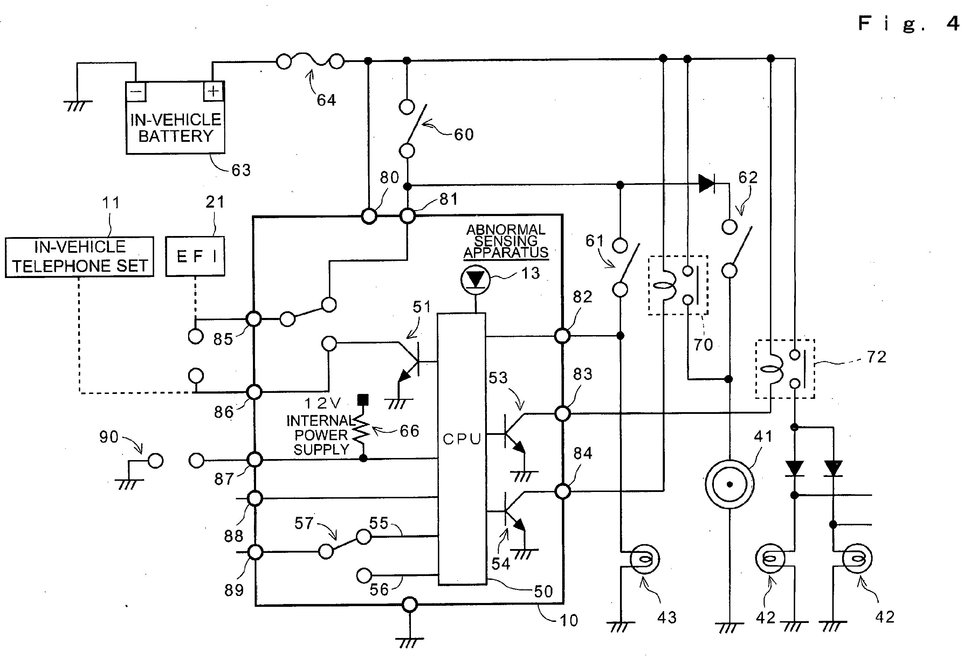

Fig. 4 is a circuit diagram of the abnormality sensing apparatus according to the present embodiment and peripheral devices thereof. The same reference numerals as those in the above description denote identical or equivalent portions. This circuit diagram mainly shows a relationship of connection between the abnormality sensing apparatus 10 and the warning means 40 (a horn and blinkers which will be described later). A CPU 50 serving as a central processing unit of the abnormality sensing apparatus 10 includes abnormality determining means and failure diagnosing means as shown in Fig. 2. An LED (light-emitting diode) to be connected to the CPU 50 serves as the indicating means 13.

An internal power supply 66 is connected to the CPU 50. The internal power supply 66 is provided in order to activate the sensors to drive the warning means 40 on the basis of output signals from the sensors, or to enable communication with the in-vehicle telephone set 11 even when an in-vehicle battery 63 is removed. The CPU 50 is driven by electrical power of the in-vehicle battery 63 when the in-vehicle battery 63 is connected to the vehicle, and the internal power supply 66 is in an unused state. During this normal time, the internal power supply 66 is fully-charged by electrical power supplied from the in-vehicle battery 63, and is set so as to be switched into a state to use only when the in-vehicle battery 63 is removed.

A plurality of input and output ports are provided in the abnormality sensing apparatus 10. Electrical power of the in-vehicle battery 63 is supplied from an input port 80 via a main fuse 64. Input ports 81 and 82 are used for monitoring operating states of an ignition switch 60 that disconnects and connects the main power supply of the vehicle and a stop lamp switch 61 that turns on a stop lamp 43.

A horn 41 activated according to an operation of a horn switch 62 and blinker lights 42 blinking according to an operation of a blinker switch (now shown) are provided on the motorcycle 1. The horn 41 and the blinker lights 42 are not activated even by operating the respective switches unless the ignition switch 60 is in an on-state. However, when an abnormal state is sensed while the vehicle is parked, the CPU 50 switches transistors 53 and 54 on, to drive relays 70 and 72 via output ports 83 and 84, so as to activate the horn 41 and the blinker lights 42 as the warning means 40.

Further, when an abnormal state of the vehicle is sensed, the CPU 50 is capable of driving a transistor 51 connected to an input and output port 85 to stop the EFI 21. Moreover, it is possible to transmit the abnormal state of the vehicle to a predetermined telephone set by use of the in-vehicle telephone set 11 connected to an input and output port 86.

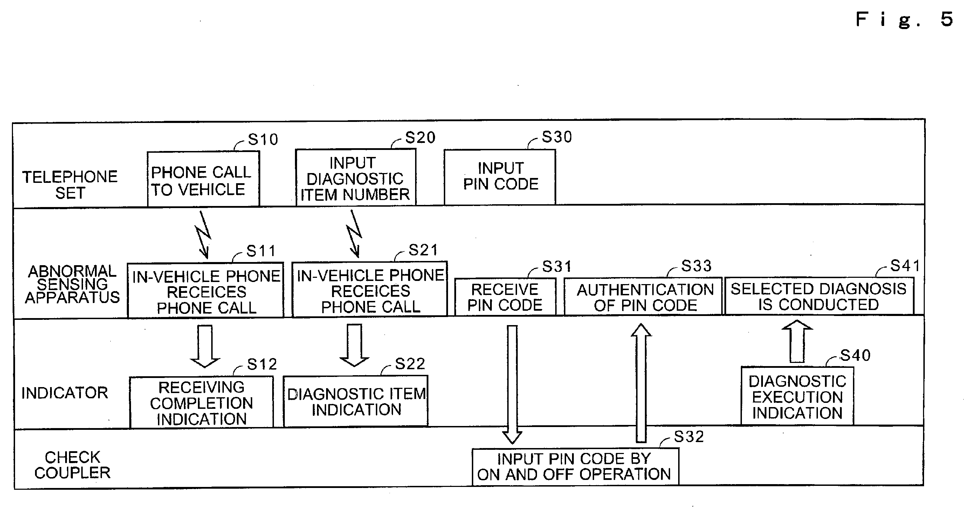

The abnormal sensor 10 according to the present embodiment is configured to use a check coupler 90 connected thereto via an input port 87 at the time of conducting a failure diagnosis by making a telephone call from the telephone set 3 to the in-vehicle telephone set 11. The check coupler 90 is a small device composed of a male coupler which has a switch, and the apparatus is configured such that it is possible to input an input signal of the switch to the CPU 50 when the male coupler is connected to a female coupler connected to the input port 87. A flow of a case where a failure diagnosis is conducted by use of the check coupler 90 will be described with reference to Fig. 5.

Fig. 5 is a time chart showing a flow of a failure diagnosis in a case where the aforementioned check coupler 90 is used. The same reference numerals as those in the above description denote identical or equivalent portions. In this modified example, there is a feature in the point that a PIN code input from the telephone set 3 and a PIN (person identification number) code input from the check coupler 90 are cross-checked to execute authentication processing for preventing access by a third person. This time chart is set such that a series of authentication processings are performed between the step 22 (diagnostic item indication) shown in Fig. 3 and the step S40 (diagnosis execution indication).

A PIN code is input to the telephone set 3 in step S30, and the in-vehicle telephone set 11 receives the input PIN code in step S31. In the following step S32, a PIN code is input by operations of turning on and off the check coupler 90. Then, in step S33, the PIN code is authenticated by the abnormality sensing apparatus 10. This authentication processing is executed in the communication control unit 12 (refer to Fig. 2) of the abnormality sensing apparatus 10.

When the authentication processing in step S33 is normally completed, it is indicated on the indicating means 13 that a failure diagnosis is conducted in step S40, and a failure diagnosis for a selected diagnostic item is conducted in step S41. That is, in the present embodiment, when a PIN code input from the telephone set 3 and a PIN code input from the check coupler 90 are different from each other, a failure diagnosis for the abnormality sensing apparatus is not conducted to prevent a third person from conducting a failure diagnosis. In addition, various modifications of types of PIN codes, a mode of the check coupler, and the like are possible. For example, it is possible to input a PIN code by an action of switching a connecting state of the check coupler without a switch or the like.

Returning to Fig. 4, output ports 88 and 89 provided in the abnormality sensing apparatus 10 are provided for connection with various types of in-vehicle devices. A serial line 55 and a K-line 56 connected to the CPU 50 can be arbitrarily switched between their connection states with the output port 89 by a jumper selector 57. The serial line 55 and the K-line 56 are communication standards used for failure diagnoses or the like for various types of in-vehicle devices, and after an in-vehicle device is connected to the output port 89, it is possible to conduct a failure diagnosis thereof by making a telephone call from the telephone set 3 to the abnormality sensing apparatus 10. In addition, the aforementioned EFI 21 as well is connected to the CPU 50 by use of the K-line 56 to be capable of conducting a failure diagnosis thereof. Further, types and numbers of input and output ports provided in the abnormality sensing apparatus 10 are not limited to the above-described embodiment, and various modifications thereof are possible.

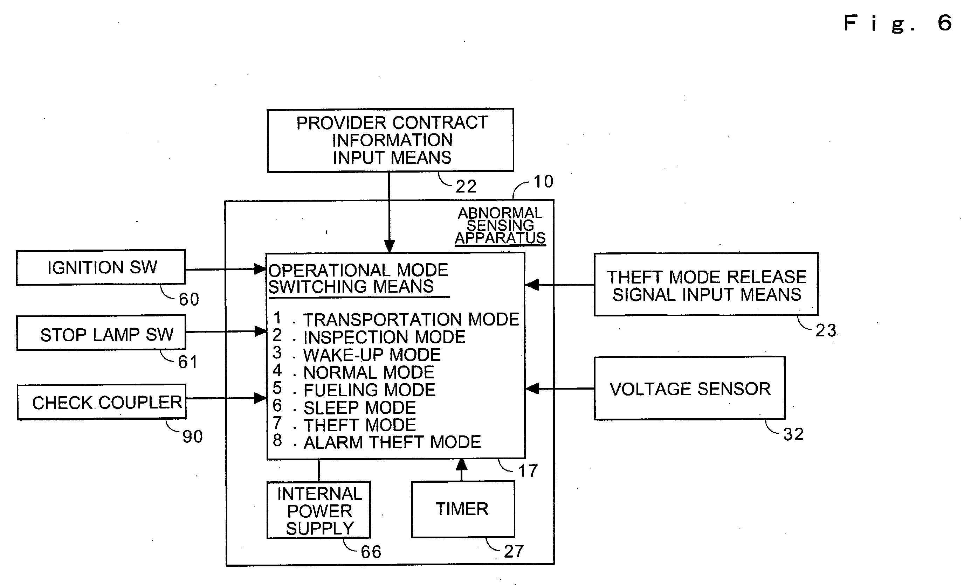

Fig. 6 is a block diagram showing the configuration of operational mode switching means 17 in the abnormality sensing apparatus 10. The operational mode switching means 17 is provided inside the aforementioned CPU 50. All the eight types of operational modes are provided in the abnormality sensing apparatus 10, and the operational mode switching means 17 is configured to be capable of switching between the operational modes on the basis of input information from the switches,the input means and the sensor, or the like. The eight types of operational modes shown below are provided.
1. Transportation mode (The second operational mode. The case in transportation from a factory to a sales shop is envisioned. The internal power supply is prohibited from being used to reduce the consumption of electrical power during a period until an in-vehicle battery is connected to the vehicle.)
2. Inspection mode (The third operational mode. A case in inspection for the abnormality sensing apparatus is envisioned.)
3. Wake-up mode (An operation of switching to a normal mode is received.)
4. Normal mode (The first operational mode. A case in normal use such as driving is envisioned. The warning means is not activated even when external force causing vibrations or the like applied to the vehicle body are sensed.)
5. Fueling mode (A case in fueling by a user (where the ignition switch SW is switched off) is envisioned. The warning means is not activated even when external force causing vibrations or the like applied to the vehicle body are sensed.)
6. Sleep mode (A case in typical off-vehicle where the ignition switch SW is switched off is envisioned. The warning means is activated when external force causing vibrations or the like applied to the vehicle body are sensed.)
7. Theft mode (A state such as the vehicle is moved with an ignition key inserted by the third person is moved or the like is envisioned. A user uses a telephone set to cause the abnormality sensing apparatus to recognize that the vehicle is in an abnormal state, to activate the warning means.)
8. Alarm theft mode (A state in which an abnormality occurs in a state in which an ignition key is pulled out is envisioned. The warning means is activated and notice is given for example to a telephone set of a user.)

Further, signals from provider contract information input means 22 that inputs information on whether or not a communications contract is concluded with the provider 4, the ignition SW (switch) 60 that switches on and off the main power supply of the vehicle, the stop lamp SW (switch) 61 that senses operations of a brake lever and a brake pedal, the aforementioned check coupler 90, theft mode release signal input means 23 that inputs a theft mode release signal transmitted from a user or the like, a voltage sensor 32 that always monitors a voltage of the in-vehicle battery 63, and a timer 27 that clocks various types of predetermined times are input to the operational mode switching means 17. In addition, the abnormality sensing apparatus 10 has the internal power supply 66 and the voltage sensor 32, so that the abnormality sensing apparatus 10 is capable of setting off an alarm even when the in-vehicle battery 63 is removed in order to suspend the function of the abnormality sensing apparatus 10.

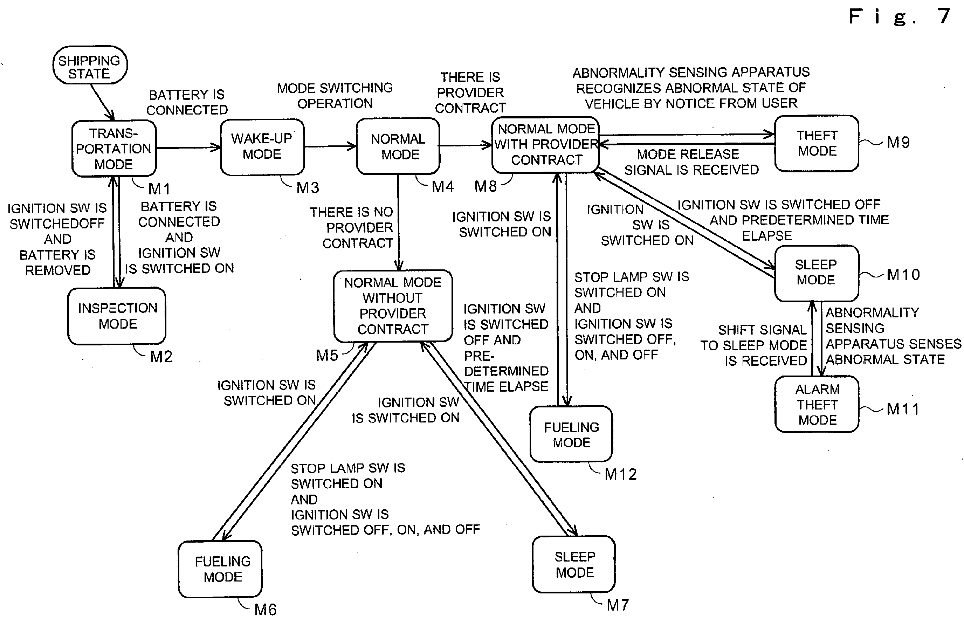

Fig. 7 is a state transition diagram showing the configuration of operational mode switching control according to the present embodiment. A shipping state denotes a state in which the in-vehicle battery 63 is not yet connected to a vehicle completed in a factory. The in-vehicle battery 63 is connected to the vehicle typically after the vehicle arrives at a sales shop, for example, at the time of delivering the vehicle to a user. In this shipping state, the operational mode of the abnormality sensing apparatus 10 is in a transportation mode M1 as the second operational mode. In the transportation mode M1, there is no need to enable the abnormality sensing function. Therefore, the apparatus is set such that the internal power supply 66 in a fully-charged state is prohibited from being used to reduce consumption of the internal power supply 66 until the in-vehicle battery 63 is connected to the vehicle.

Next, when the in-vehicle battery 63 is connected to the vehicle, the operational mode is shifted to a wake-up mode M3 in which an operation of switching to a normal mode M4 is received. On the other hand, when the in-vehicle battery 63 is connected to the vehicle and the ignition SW (switch) 60 is switched on, the operational mode is shifted to an inspection mode M2. The inspection mode M2 is set for carrying out an inspection for the abnormality sensing apparatus 10 in a factory, a sales shop, or the like. Accordingly, in an inspection for a completed vehicle in a factory, the in-vehicle battery is once connected to the vehicle to switch to the inspection mode M2, and the inspection for the system is carried out, and after the mode is switched to the transportation mode M1 after the inspection, the in-vehicle battery is detached from the vehicle to make shipment to a sales shop. Thereby, it is possible to carry out an inspection for the system once the battery is connected to the vehicle, and the system is not improperly activated when the battery is removed. Therefore, the in-vehicle battery can be removed, which does not allow the in-vehicle battery to be discharged until the vehicle is consigned to a customer, and in addition, the internal power supply is not consumed. An inspection for the abnormality sensing apparatus 10 may be carried out by checking whether or not the indicating means (LED) 13 is turned on as expected, for example, when the check coupler 90 is connected thereto. In addition, when the ignition SW 60 is switched off and the in-vehicle battery 63 is removed in the inspection mode M2, the operational mode is returned to the transportation mode M1.

Then, when a predetermined operational mode switching operation is performed in the wake-up mode M3, the operational mode is shifted to the normal mode M4 in which a case in normal use by a user is envisioned. The normal mode M4 is set so as to activate the acceleration sensor 30, and the inclination sensor 31, but to prohibit the warning means 40 from being activated on the basis of output signals from the sensors 30, 31. Thereby, it is possible to use output signals from the acceleration sensor 30, and the inclination sensor 31, and the like for fuel injection control or ignition control without activating the warning means 40 during driving the vehicle. The details of the operational mode switching operation at the time of shifting from the wake-up mode M3 to the normal mode M4 will be described later.

When the operational mode is shifted to the normal mode M4, the abnormality sensing apparatus 10 checks whether or not a user has concluded a communications contract with the predetermined provider 4. Then, when a communications contract is concluded, the operational mode is shifted to a normal mode M8 with a provider contract. On the other hand, when a communications contract is not concluded, the operational mode is shifted to a normal mode M5 without a provider contract.

When the ignition SW 60 of the vehicle is switched off and a predetermined time (for example, one minute) elapses in the normal mode M8 with a provider contract, the operational mode is shifted to a sleep mode M10. When external force such as vibrations are applied to the vehicle body to sense an abnormal state in the sleep mode M10, the operational mode is shifted to an alarm theft mode M11. In the alarm theft mode M11, the case where the vehicle is brought into an abnormal state in a state in which the ignition key is pulled out of the vehicle body is envisioned. In this case, the abnormality sensing apparatus 10 activates the warning means 40 and is capable of giving notice of the vehicle being in an abnormal state to a predetermined contact or destination such as a mobile telephone, a personal computer, or the like of a user.

Further, in the case where the operational mode is shifted to the alarm theft mode M11 due to a user's unintended movement to swing or rock the vehicle in the sleep mode M10, it is possible return the operational mode to the sleep mode M10 by, for example, transmitting a sleep mode shift signal to the abnormality sensing apparatus 10 by use of the telephone set 3 of the user. In addition, when the ignition SW 60 is switched on in the sleep mode M10, the operational mode is returned to the normal mode M8 with a provider contract.

On the other hand, in fueling, the vehicle is in a state in which the ignition SW 60 is switched off, and also a user may swing or rock the vehicle body. Therefore, the apparatus is set such that when an operation of switching off, on, and off the ignition SW 60 is performed while the stop lamp SW 61 is made to stay on by operating the brake lever in the normal mode M8 with a provider contract, the operational mode is shifted to a fueling mode M12 in which the warning means 40 is not activated even when the sensors sense external force such as vibrations or the like. In addition, when the ignition SW 60 is switched on in the fueling mode M12, the operational mode is returned to the normal mode M8 with a provider contract.

Further, the vehicle may be brought into an abnormal state in a state in which the ignition key is inserted into a key-hole of the vehicle, i.e., in a state in which it is possible for a third person to switch on the ignition SW 60. At this time, even when the vehicle is actually in an abnormal state, the abnormality sensing apparatus 10 does not activate the warning means 40 because a normal operation using the ignition key is performed. However, in a case where a provider contract is concluded, for example, it is possible for a user noticing an abnormality to make a telephone call from the telephone set 3 to the abnormality sensing apparatus 10 to cause the abnormality sensing apparatus 10 to recognize that the vehicle is in an abnormal state.

Thereby, the abnormality sensing apparatus 10 is capable of activating the warning means 40 or stopping the fuel injector even while the vehicle in an abnormal state is driving. Moreover, it is possible to know an actual location of the vehicle by use of the function of the aforementioned GPS. In addition, when a user transmits a theft mode release signal through the telephone set 3 in a theft mode M9, the operational mode is returned to the normal mode M8 with a provider contract.

In the above description, the operations when a provider contract has been already concluded has been described. To the contrary, in a case where a provider contract is not concluded, it is impossible to utilize a remote operation for the abnormality sensing apparatus 10 by making a telephone call to the in-vehicle telephone set 11, or a location finding function of the GPS. When the ignition SW 60 is switched off and a predetermined time (for example, one minute) elapses in the normal mode M5 without a provider contract, the operational mode is shifted to a sleep mode M7. When external force such as vibrations are applied to the vehicle body to sense an abnormal state in the sleep mode M7, only the warning means 40 is activated. In addition, when the ignition SW 60 is switched on in the sleep mode M7, the operational mode is returned to the normal mode M5 without a provider contract.

Further, when the stop lamp SW 61 is switched on by operating the brake lever or the like, and an operation of switching off, on, and off the ignition SW 60 is performed in the normal mode M5 without a provider contract, the operational mode is shifted to the fueling mode M6 in which the warning means 40 is not activated even when the various types of sensors sense vibrations or the like. When the ignition SW 60 is switched on in the fueling mode M6, the operational mode is returned to the normal mode M5 without a provider contract.

Determination of an abnormal state by the abnormality sensing apparatus 10 according to the present embodiment is carried out on the basis of output signals from, not only the acceleration sensor 30 and the inclination sensor 31, but also the voltage sensor 32. The voltage sensor 32 always monitors a voltage of the in-vehicle battery, and the abnormality sensing apparatus 10 is configured to determine that a work for removing the in-vehicle battery 63 from the vehicle body is carried out, to shift the operational mode to the alarm theft mode M11 when a battery voltage is rapidly reduced to substantially zero in the sleep mode M10, for example. In addition, determination of an abnormal state on the basis of a rapid battery voltage reduction is carried out in the same way in the sleep mode M7 shifted from the normal mode M5 without a provider contract:

Meanwhile, in a case where a motorcycle equipped with the abnormality sensing apparatus 10 as described above is a vehicle having a kick starter or a manual transmission system vehicle which can be push-started, it is possible to start an engine thereof even in a state in which the in-vehicle battery 63 is dead. Then, when the engine is started in a state in which the battery is dead, and thereafter, the ignition SW 60 is switched off, electrical power supply from a generator is stopped at the same time as stopping of the engine, that leads to a rapid reduction in voltage sensed by the voltage sensor 32. Thereby, the operational mode switching means 17 (refer to Fig. 2) of the abnormality sensing apparatus 10 may determine that the vehicle is in an abnormal state, to shift the operational mode to the alarm theft mode M11. Accordingly, when a user finishes to drive the vehicle, the warning means 40 may be activated immediately after the ignition SW 60 is switched off in order to stop the engine.

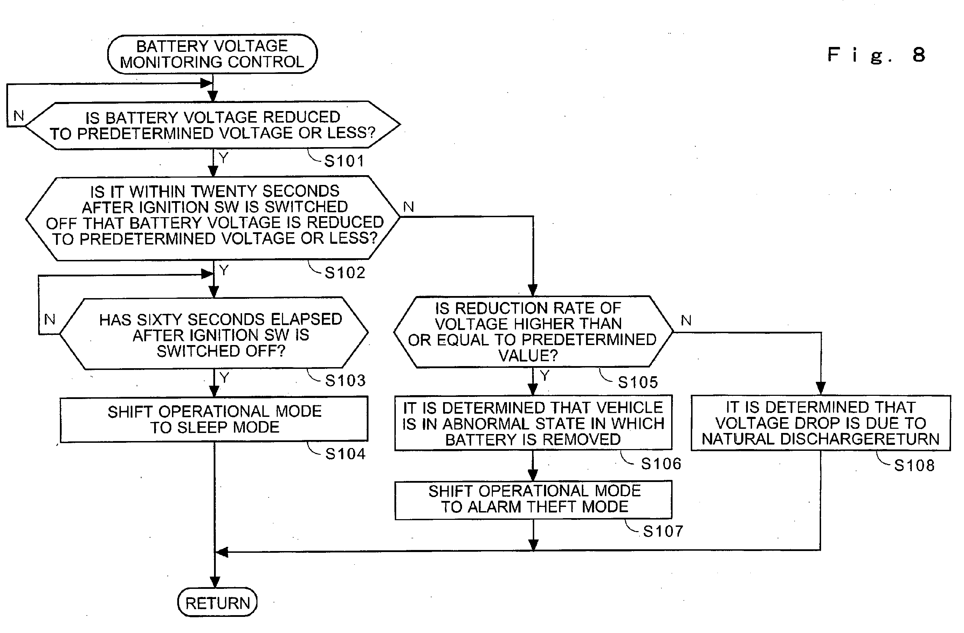

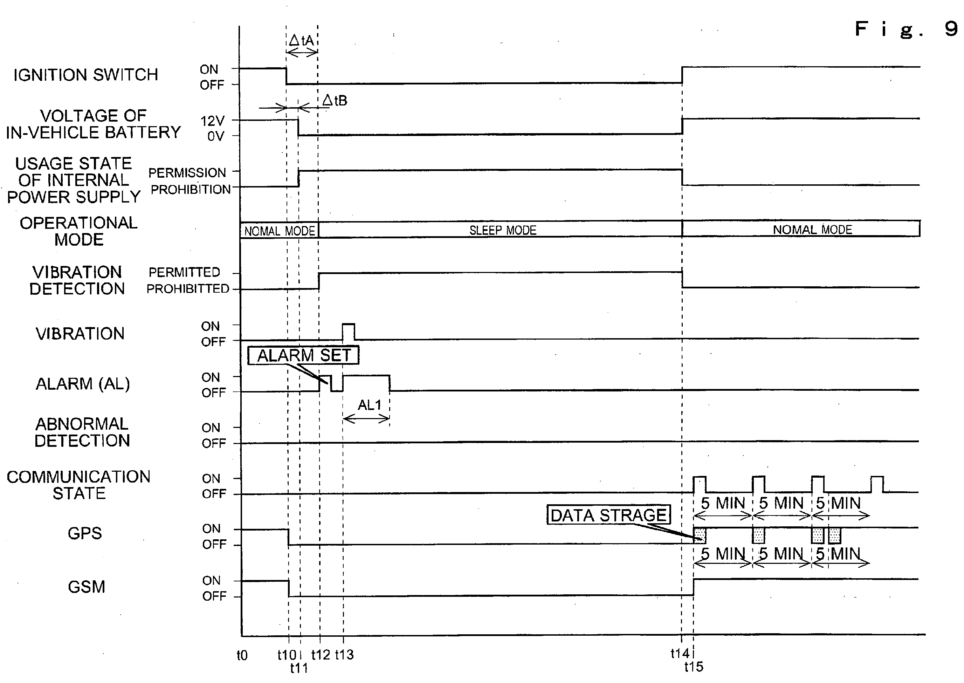

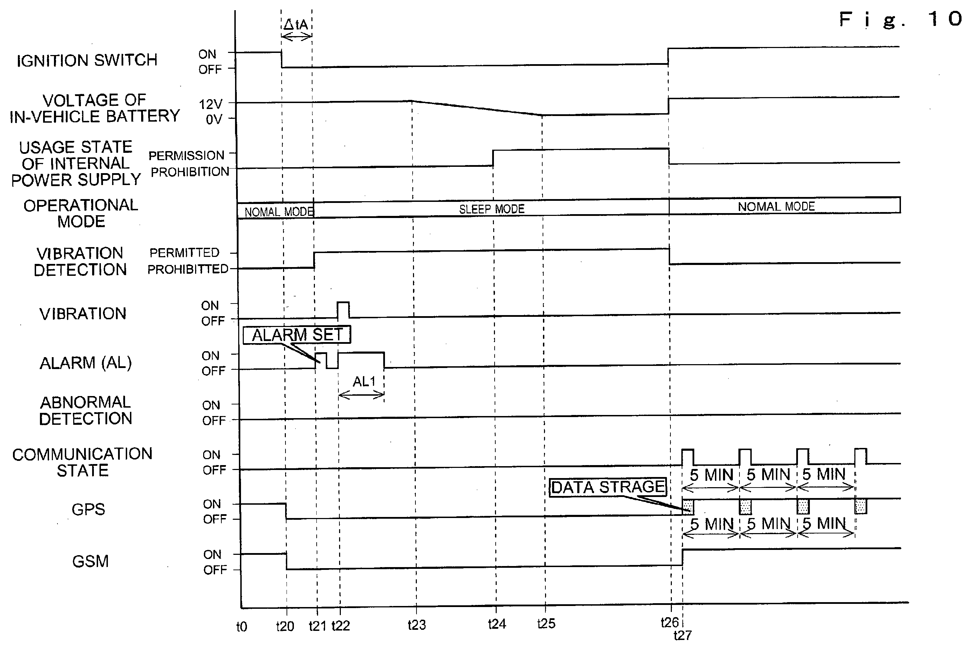

The abnormality sensing apparatus 10 according to the present embodiment is configured to be capable of preventing false sensing of an abnormal state as described above, which may be caused when the in-vehicle battery 63 is dead. Hereinafter, the procedure for preventing false sensing when the battery is dead will be described with reference to a flowchart of Fig. 8 and time charts of Figs. 9 and 10.

Fig. 8 is a flowchart showing a flow of battery voltage monitoring control performed in the operational mode switching means 17. The battery voltage monitoring control according to the present embodiment has a feature in the point that not only a detected value by the voltage sensor 32, but also an output value from the timer 27 that clocks a predetermined time are used to prevent false sensing of an abnormal state.

In step S 101, it is determined whether or not a voltage of the in-vehicle battery 63 is reduced to a predetermined voltage (for example, 5V) or less. When it is determined to be positive in step S101, the procedure proceeds to step S102, and it is determined whether or not a time in which the battery voltage is reduced to the predetermined voltage or less is within twenty seconds as a predetermined time after the ignition SW 60 is switched off. When it is determined to be positive in step S102, in other words, the battery voltage significantly drops during a period until an extremely short predetermined time elapses after the ignition SW 60 is switched off, it is determined that a user has switched off the ignition SW 60 after driving of the vehicle in a state in which the battery is dead, and the procedure proceeds to step S103.

In step S103, it is determined whether or not sixty seconds have elapsed after the ignition SW 60 is switched off. When it is determined to be positive, the operational mode is shifted to the sleep mode M10 in step S104, that terminates a series of controls. In addition, the reason for that the apparatus is on standby for sixty seconds until the operational mode is shifted to the sleep mode M10 after the ignition SW 60 is switched off is to prevent the vehicle from being determined as being in an abnormal state, for example, while getting off the vehicle or while putting a cover on the vehicle body, and this standby time may be changed arbitrarily. Further, when it is determined to be negative in steps S101 and S106, the procedure of steps S101 and S102 repeated until their determination turn to positive.

On the other hand, when it is determined to be negative in step S 102, the procedure proceeds to step S 105, and it is determined whether or not a reduction rate of battery voltage is higher than or equal to a predetermined value. When the battery voltage is rapidly reduced after it is determined to be positive in steps S105, that is, after a sufficient time has elapsed after the ignition SW 60 is switched off, the procedure proceeds to step S 106, and it is determined that the vehicle is in an abnormal state in which the in-vehicle battery 63 is removed while the vehicle is parked. Then, the operational mode is shifted to the alarm theft mode M11 in step S107.

Further, when the battery voltage is slowly reduced to a predetermined voltage or less after it is determined to be negative in step S 105, that is, after a sufficient time has elapsed after the ignition SW 60 is switched off, it is determined that the in-vehicle battery 63 is naturally discharged in step S108.

In accordance with the battery voltage monitoring control as described above, it is not determined that a state in which a user switches off the ignition SW when the battery is dead is an abnormal state, but it is possible to securely sense a state in which the in-vehicle battery is removed. Moreover, even a case where the in-vehicle battery is naturally discharged is not determined as being in an abnormal state, which results in an abnormality sensing apparatus with little false sensing.

Next, a flow of the battery voltage monitoring control will be described again with reference to the time chart of Fig. 9. Fig. 9 corresponds to a case where the in-vehicle battery 63 is completely dead. From the top in this time chart, the on and off state of the ignition SW 60, the voltage value of the in-vehicle battery 63, the usage state of the internal power supply 66, the operational mode of the abnormality sensing apparatus 10, the allowance state of a vibration detected value by the acceleration sensor 30 for abnormal state determination, the presence or absence of vibrations applied to the vehicle body, the activation state of the warning means 40, the presence or absence of abnormality sensing determination, the communication state of the in-vehicle telephone set 11, the activation state of the GPS 20, and the activation state of the GSM (in-vehicle telephone set) are shown.

In the present embodiment, because the in-vehicle battery 63 is completely dead, when the ignition SW 60 is switched off at clock time t10, i.e., the engine is stopped to stop electrical power supply by the generator, the voltage value is reduced to substantially zero at clock time t11 after a time ΔtB has elapsed. In the present embodiment, the apparatus is configured so as not to determine that the vehicle is in an abnormal state when the time ΔtB is less than or equal to twenty seconds. Then, at clock time t11, the internal power supply 66 is switched from a usage-prohibited state to a usable state in order to continuously drive the abnormality sensing apparatus 10.

In addition, the reason for that the time ΔtB is set to twenty seconds in the present embodiment is because it is taken into account that it takes a while until the generator is completely stopped due to inertia force of its crankshaft even after the ignition SW 60 is switched off. Further, the GPS 20 and the GSM are brought into an inactive state at clock time t10. When a communications contract with the provider 4 is not concluded, the GSM and its communication state are not turned on.

Then, when a time ΔtA (sixty seconds in the present embodiment) elapses after the ignition SW 60 is switched off, the operational mode is shifted from the normal mode with a provider contract M8 to the sleep mode M10, that allows a vibration detected value to be used for abnormal state determination.

In the present embodiment, in order to give notice to a user that the abnormality sensing apparatus 10 is normally functioning together with shifting the operational mode to the sleep mode M10 at clock time t12, the apparatus is configured to make a confirmation sound as an alarm set for a length of 0.1 seconds, for example. Thereafter, the apparatus is configured to make a warning beep only for a predetermined time when vibrations are applied to the vehicle body. In the present embodiment, a warning beep is made only for a time AL1 with respect to the applied vibrations at clock time t13. At this time, the abnormality sensing apparatus 10 does not yet determine that the vehicle is in an abnormal state. This is because the abnormality sensing apparatus 10 is set so as not to sense that the vehicle is in an abnormal state by inputting vibrations once, such as a case where a passerby happens to touch the parked vehicle, but to call attention with a warning beep.

Next, at clock time t14, the ignition SW 60 is switched on and the engine is started by a kick starter or the like. Thereby, the generator is started, and when a voltage value sensed by the voltage sensor 32 exceeds a predetermined voltage, the internal power supply 66 is switched into a usage-prohibited state.

Further, at clock time t14, the operational mode of the abnormality sensing apparatus 10 is switched from the sleep mode M10 to the normal mode with a provider contract M8. Then, at clock time t15, the GPS and the GSM are brought into an active state, and thereafter, the in-vehicle telephone set 11 performs communication with the provider 4 once per five minutes in order to update the latest information such as traffic jam information, weather forecast information, or the like. Moreover, in this communication, GPS information with which a history of a vehicle location with an elapsed time may be maintained is transmitted to the provider 4.

Next, a flow of the battery voltage monitoring control corresponding to a case where the in-vehicle battery 63 is not yet dead, but weakening, or a case where the battery voltage is lowered due to its natural discharge because the engine has not been started for a long period of time(for example, in a matter of months) will be described with reference to Fig. 10. Detailed descriptions of the points which are the same as those in Fig. 9 will be omitted.

In the example shown in Fig. 10, even when the ignition SW 60 is switched off at clock time t20, the voltage value of the in-vehicle battery 63 is maintained at a sufficiently high value. Then, at clock time t21 at which ΔtA has elapsed after the ignition SW 60 is switched off, the operational mode is switched from the normal mode with a provider contract M8 to the sleep mode M10. Further, processing of the alarm set according to a shift of the operational mode is carried out in the same way as in the example of Fig. 9.

As described above, where the battery voltage is sufficiently high, when the predetermined time ΔtA (sixty seconds in the present embodiment) elapses after the ignition SW 60 is switched off, the operational mode is shifted to the sleep mode M10, and the next operation of switching on the ignition SW 60 is merely waited for. However, when the in-vehicle battery 63 has deteriorated, or when a long time has elapsed without starting the engine, the voltage value may be gradually lowered due to its natural discharge.

In the present embodiment, the case where the voltage value which has started being reduced from clock time t23 is reduced to the predetermined voltage or less at clock time t24, and further is reduced to substantially zero at clock time t25 is shown. At clock time t24, the internal power supply 66 is switched into a usable state, and it is determined whether or not a time in which the battery voltage is reduced to the predetermined voltage or less is within twenty seconds after the ignition SW is switched off (which corresponds to step S102 in Fig. 8).

In the case of the example shown in Fig. 10, because it is after a sufficient time of at least sixty seconds or longer has elapsed after the ignition SW 60 is switched off, it is determined whether or not a reduction rate of the battery voltage is higher than or equal to a predetermined value (which corresponds to step S105 in Fig. 8). The predetermined value for a reduction rate is set to a reduction rate when the battery voltage is reduced from 12V to 0V in one second. Accordingly, because the reduction rate is much lower than the predetermined value in the example of this diagram, it is determined that it is a voltage reduction due to its natural discharge, and the operational mode is not shifted to the alarm theft mode M11.

The GPS and the GSM which are stopped at the same time as the ignition SW is switched off are switched into an active state at the same time as the ignition SW 60 is switched on at clock time t26, and wireless communication by the in-vehicle telephone set 11 is performed from clock time t27.

As described above, in accordance with the abnormality sensing apparatus according to the present invention, because the abnormality sensing apparatus is configured to determine that the vehicle is not in an abnormal state in a case where the battery voltage is reduced to the predetermined voltage or less within the predetermined time after the ignition SW is switched off, and on the other hand, to determine that the vehicle is in an abnormal state in a case where the battery voltage is reduced to the predetermined voltage or less after the predetermined time elapses, and a reduction rate of the battery voltage is higher than or equal to a predetermined value, in a vehicle whose engine can be started by a kick starter or push-started even in a case where the battery is dead, it is possible to prevent the warning means from being activated due to determination that the vehicle is in an abnormal state immediately after the ignition switch is switched off to stop the engine. Further, in a case where the in-vehicle battery is removed while the vehicle is parked after a sufficient time has elapsed after the ignition SW is switched off, the abnormality sensing apparatus is capable of accurately determining that the vehicle is in an abnormal state.

The configuration and layout of the abnormality sensing apparatus, the types of sensors sensing an abnormal state, the warning means, the configuration of the indicating means, the function of the communication control unit, the type of communication standard of the in-vehicle telephone set, the method of using the GPS, the lighting pattern of the indicating means, the predetermined time used for the battery voltage monitoring control, and the like are not limited to those in the above-described embodiment, and various modifications thereof are possible. For example, with respect to a predetermined value for a reduction rate of the battery voltage, in addition to a method in which it is set in advance in a program of the abnormality sensing apparatus, a method in which it is learned from a history of changes in battery voltage may be applied. The abnormality sensing apparatus according to the present invention is applicable to, not only a motorcycle, but also three-wheeled vehicles, four-wheeled vehicles, and the like.

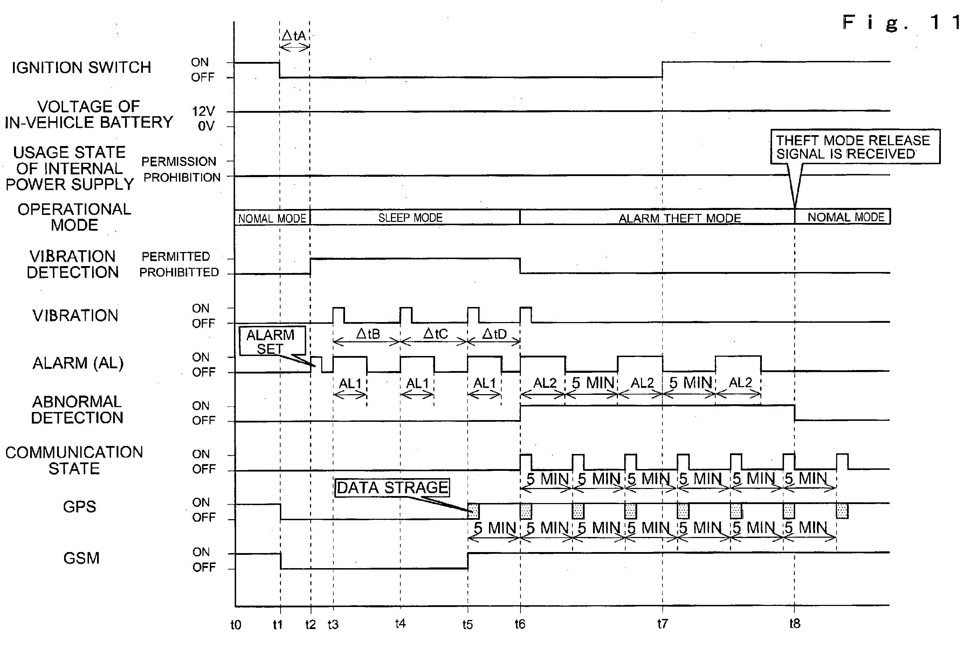

Meanwhile, for example, if the abnormality sensing apparatus 10 as described above is configured to determine that the vehicle is in an abnormal state in a case where vibrations over a predetermined magnitude are input only once, it may be determined that the vehicle is in an abnormal state even in a case where a passerby happens to touch the vehicle body by accident or in a case where a user moves the vehicle body a little in a parking space for motorcycles, to cause the warning means 40 to be activated. In order to prevent such false sensing, the abnormality sensing apparatus 10 according to the present embodiment is configured to determine that the vehicle is in an abnormal state only in a case corresponding to a predetermined pattern determined in advance, which is composed of a combination of a sensing interval and the number of times of sensing of vibrations. Hereinafter, a predetermined pattern with which the abnormal state determining means 15 determines that the vehicle is in an abnormal state will be described with reference to a time chart of Fig. 11.

Fig. 11 is the time chart showing a relationship between vibrations applied to the vehicle body and abnormal state determination. The abnormal state determining means 15 according to the present embodiment has a feature in the point that not only a detected value by the acceleration sensor 30 serving as a vibration sensor, but also an output value from the timer 27 serving as measuring means for measuring a sensing interval and the number of times of sensing of vibrations are used to prevent false sensing of an abnormal state.

From the top in this time chart, the on and off state of the ignition SW 60, the voltage value of the in-vehicle battery 63, the usable state of the internal power supply 66, the operational mode of the abnormality sensing apparatus 10, the allowance state of a vibration detected value by the acceleration sensor 30 for abnormal state determination, the presence or absence of vibrations applied to the vehicle body, the activation state of the alarm (horn 41) included in the warning means 40, the presence or absence of abnormality sensing determination, the communication state of the in-vehicle telephone set 11, the activation state of the GPS 20, and the activation state of the GSM (in-vehicle telephone set) are shown.

When the ignition SW 60 is switched off at clock time t1, at clock time t2 after a time ΔtA (sixty seconds in the present embodiment) has elapsed, the operational mode is switched from the normal mode with a provider contract M8 to the sleep mode M10, and it is allowed that a vibration detected value is used for abnormal state determination. In addition, the GPS 20 and the GSM are brought into an inactive state at clock time t1 at which the ignition SW 60 is switched off. Further, when a communications contract with the provider 4 is not concluded, the GSM and its communication state are not turned on.

In order to give notice to a user that the abnormality sensing apparatus 10 is normally functioning at the same time as the operational mode is shifted to the sleep mode M 10 at clock time t2, the apparatus is configured to make a confirmation sound as an alarm set for a length of 0.1 seconds, for example. The apparatus is configured to make a warning beep only for an extremely short time (for example, five seconds) when vibrations over a predetermined value are singly applied to the vehicle body in the sleep mode M10.

A warning beep is made only for a time AL1 (for example, five seconds) with respect to the applied vibrations at clock time t3. At this time, the abnormality sensing apparatus 10 does not determine that the vehicle is in an abnormal state. This is because the abnormality sensing apparatus 10 is set so as not to determine that the vehicle is in an abnormal state by singly inputting vibrations, such as a case where a passerby comes into contact with the parked vehicle, but to call attention by making a short warning beep.

At clock time t4 after a time ΔtB has elapsed from clock time t3 at which the first vibrations is detected, the second vibrations is detected. The abnormality sensing apparatus 10 makes a warning beep only for the time AL1 at this clock time t4 as well. Further, at clock time t5 after a time ΔtC has elapsed from clock time t4 at which the second vibrations is detected, the third vibrations is detected. In this case as well, the abnormality sensing apparatus 10 makes a warning beep for calling attention only for the time AL1.

However, when the fourth vibrations is detected at clock time t6 at which a time ΔtD has elapsed from clock time t5 at which the third vibrations is detected, the abnormal state determining means 15 (refer to Fig. 2) determines that the vehicle is in an abnormal state, and the operational mode of the abnormality sensing apparatus 10 is shifted from the sleep mode M10 to the alarm theft mode M11.

The abnormality sensing apparatus 10 is configured to memorize a plurality of vibration patterns determined in advance, and to store a history of vibration detected (a sensing interval and the number of times of sensing) for a predetermined time. In the example of Fig. 11, the apparatus is set such that it is determined that the vehicle is in an abnormal state in a case where "it is repeated three times that vibrations over a predetermined value are sensed once within five minutes after first sensing vibrations over the predetermined value," and because times ΔtB, ΔtC, and ΔtD are respectively five minutes or less, the apparatus determines that the vehicle is in an abnormal state at clock time t6.

The vibration patterns determined in advance may be set to a case where "it is repeated twice that vibrations over a predetermined value are sensed once for a time from five minutes to ten minutes after first sensing vibrations over the predetermined value," or a case where "vibrations over a predetermined value are sensed continuously for ten minutes or more," or the respective cases may be used together.

Then, when the operational mode is switched to the alarm theft mode M11 at clock time t6, a warning by the alarm (horn 41) is started. In this warning, blinking of the blinker lights 42 as well is performed along with the alarm. In the present embodiment, the apparatus is set such that the alarm is stopped for five minutes after the alarm is activated for a time AL2 (for example, three minutes), thereby a warning against a third person is effectively performed and a reduction in electrical power consumption of the in-vehicle battery 63 are both achieved. The patterns of activating the horn 41 and the blinker lights 42 may be changed arbitrarily.

At clock time t6 at which the operational mode is switched to the alarm theft mode M11, the state of vibration detection allowance is switched from an allowed state to a prohibited state, and the in-vehicle telephone set 11 (refer to Fig. 1) is driven by the communication control unit 12 to give notice of the vehicle body being in an abnormal state to the telephone set 3, a personal computer, or the like of a user. In this communication, actual location information of the vehicle sensed by the GPS as well is transmitted. In the present embodiment, this communication is performed every five minutes to be able to appropriately update the latest information while reducing electrical power consumption. Thereby, it is possible for a user of the vehicle to know a travel route or the like of the vehicle after the vehicle is brought into an abnormal state. Further, it is possible to transmit information on the abnormal state of the vehicle to the provider 4 to try responding such as calling for cooperation from the police, a security company, or the like via the provider 4.

In addition, the GPS and the GSM are switched into an active state at clock time t5 at which the third vibration is detected. This is a setting with which it is possible to record a location of the vehicle just before it is determined that the vehicle is in an abnormal state by starting the GPS and the GSM in advance at the time t5 in a state in which it is determined that the vehicle is in an abnormal state when a vibration is detected one more time within five minutes. Further, this setting is effective for rapidly starting wireless communication when it is determined that the vehicle is in an abnormal state. In addition, travel history information by the GPS is recorded in a memory inside the GPS as well.

As described above, the reason for that the plurality of vibration patterns are provided is because it may be possible to reliably determine that various types of abnormal states are abnormal states, and it may be possible for a user or the like to infer how an abnormality is caused according to a vibration pattern with which it is determined that the vehicle is in an abnormal state.

For example, in a case where "it is repeated three times that vibrations over a predetermined value are sensed once within five minutes after first sensing vibrations over the predetermined value," it may be possible to sense that exterior components or the battery are being removed. Further, in a case where "it is repeated twice that vibrations over a predetermined value are sensed once for a time from five minutes to ten minutes after first sensing vibrations over the predetermined value," it may be possible to sense that work for destroying a chain-lock for connecting the vehicle to a column or the like or a bar-lock for disabling the wheel to rotate is being executed. Moreover, in a case where "vibrations over a predetermined value are sensed continuously for ten minutes or more," it may be possible to sense that the vehicle is immediately loaded on a truck or the like for transportation, and the truck is running.

Further, provided that notice of a vibration pattern with which it is determined that the vehicle is in an abnormal state as well is given in the aforementioned wireless communication, it may be possible to infer by a user or a provider what kind of abnormal state the vehicle is in.

Meanwhile, in the example of Fig. 11, the ignition SW 60 is switched on at clock time t7. This example corresponds to a situation in which the ignition SW 60 is switched on in order to stop the warning means 40 when the operational mode is shifted to the alarm theft mode M11 by mistake while a user is performing maintenance or the like for the vehicle. However, the abnormality sensing apparatus 10 according to the present embodiment is configured so as not to release the alarm theft mode M11 by merely switching on the ignition SW 60.

Shifting from the alarm theft mode M11 to the normal mode with a provider contract M8 (refer to Fig. 7) is performed only when a user makes a telephone call to the in-vehicle telephone set to transmit a theft mode release signal. In the example of Fig. 8, a theft mode release signal is received at clock time t8, the operational mode is shifted from the alarm theft mode M11 to the normal mode with a provider contract M8, and the warnings with the horn 41 and the blinker lights 42 are stopped as well. In addition, in a case where the ignition SW 60 is switched off when a theft mode release signal is received, the operational mode is shifted to the sleep mode M10.

As described above, because it is determined that the vehicle is in an abnormal state only in a case corresponding to a predetermined pattern determined in advance composed of a combination of a sensing interval and the number of times of sensing of vibrations, such as a case where "it is repeated three times that vibrations over a predetermined value are sensed once within five minutes after first sensing vibrations over the predetermined value," it is possible to prevent that it is determined that the vehicle is in an abnormal state only when temporal vibrations are sensed such as a case where a passerby happens to touch the vehicle body by mistake.

In addition, the configuration and layout of the abnormality sensing apparatus, the kinds of the various types of sensors sensing an abnormal state and the warning means, the configuration of the indicating means, the function of the communication control unit, the type of communication standard of the in-vehicle telephone set, the method of using the GPS, the lighting pattern of the indicating means, the vibration input patterns determined in advance for determining that the vehicle is in an abnormal state, the patterns of activating the alarm (warning means), the communication contents and the communication frequencies when it is determined that the vehicle is in an abnormal state, and the like are not limited to those in the above-described embodiment, and various modifications thereof are possible. The abnormality sensing apparatus according to the present invention is applicable to, not only a motorcycle, but also three-wheeled vehicles, four-wheeled vehicles, and the like.

### Reference Signs List

1: MOTORCYCLE (VEHICLE),
2: PUBLIC TELEPHONE STATION,
3: TELEPHONE SET,
4: NETWORK SERVICE PROVIDER,
10: ABNORMALITY SENSING APPARATUS (ABNORMALITY SENSING AND VEHICLE TRACKING APPARATUS),
11: IN-VEHICLE TELEPHONE SET,
12: COMMUNICATION CONTROL UNIT,
13: INDICATING MEANS,
14: FAILURE DIAGNOSING MEANS,
15: ABNORMAL STATE DETERMINING MEANS,
16: TRANSMITTING AND RECEIVING ANTENNA,
17: OPERATIONAL MODE SWITCHING MEANS,
20: GPS (GLOBAL POSITING SYSTEM),
21: EFI (ELECTRONICALLY CONTROLLED FUEL INJECTOR),
27: TIMER (MEASURING MEANS),
30: ACCELERATION SENSOR (VIBRATION SENSOR),
31: INCLINATION SENSOR,
32: VOLTAGE SENSOR,
40: WARNING MEANS,
60: IGNITION SWITCH,
61: STOP LAMP SWITCH,
63: IN-VEHICLE BATTERY,
66: INTERNAL POWER SUPPLY,
90: CHECK COUPLER,
M1: TRANSPORTATION MODE,
M2: INSPECTION MODE,
M3: WAKE-UP MODE,
M4: NORMAL MODE (FIRST OPERATIONAL MODE),
M5: NORMAL MODE WITHOUT PROVIDER CONTACT,
M6, M12: FUELING MODE,
M7, M10: SLEEP MODE,
M8: NORMAL MODE WITH PROVIDER CONTACT,
M9: THEFT MODE,
M11: ALARM THEFT MODE

## Claims

1. An abnormality sensing and vehicle tracking apparatus (10) having a function which senses an abnormal state of a vehicle on the basis of a battery voltage of an in-vehicle battery (63) sensed by a voltage sensor, and a vehicle tracking function, the apparatus comprising:
an internal power supply (66) that activates the abnormality sensing and vehicle tracking apparatus (10);
battery voltage sensing means (32) for sensing the battery voltage; and
operational mode switching means (17) for switching an operational mode of the abnormality sensing and vehicle tracking apparatus (10) to theft alarm mode (M11) in which at least warning means (40) is activated when it is determined that the vehicle (1) is in an abnormal state on the basis of the sensed battery voltage, wherein
the operational mode switching means (17) switches the operational mode to the theft alarm mode (M11) according to a drop in the level of the battery voltage when an ignition switch (60) that switches on and off a main power supply of the vehicle (1) is switched off;
the abnormality sensing and vehicle tracking apparatus (10) being **characterized in that** in a case where the battery voltage is reduced to a predetermined voltage or less within a predetermined time after the ignition switch (60) that switches on and off the main power supply of the vehicle (1) is switched off, the operational mode switching means (17) does not determine that the vehicle (1) is in an abnormal state, and on the other hand, in a case where the battery voltage is reduced to the predetermined voltage or less after a predetermined time has elapsed, and a reduction rate of the battery voltage is higher than or equal to a predetermined value, the operational mode switching means (17) determines that the vehicle (1) is in an abnormal state, and switches the operational mode to the theft alarm mode (M11).

2. The abnormality sensing and vehicle tracking apparatus according to claim 1 wherein, in a case where the battery voltage is reduced to the predetermined voltage or less after a predetermined time has elapsed, and a reduction rate of the battery voltage is less than the predetermined value, the operational mode switching means (17) determines that the vehicle (1) is not in an abnormal state, and does not switch the operational mode.

3. The abnormality sensing and vehicle tracking apparatus according to claim 1 or 2, comprising the internal power supply (66) that causes the abnormality sensing and vehicle tracking apparatus (10) to continuously drive when the battery voltage of the in-vehicle battery (63) is reduced to a predetermined value or less.

4. The abnormality sensing and vehicle tracking apparatus according to claim 1 which senses an abnormal state of the vehicle (1) with abnormality sensing means including a vibration sensor (30) that senses vibrations applied to the vehicle (1), and further has a vehicle tracking function, the apparatus comprising:
measuring means (27) for measuring a sensing interval and the number of times of sensing of the vibrations; and
abnormal state determining means (15) for determining an abnormal state of the vehicle (1) on the basis of an output signal from the vibration sensor (30), wherein
the abnormal state determining means (15) memorizes a plurality of predetermined patterns which are composed of combinations of sensing intervals and numbers of times of sensing of the vibrations, and determines an abnormal state of the vehicle (1) according to a corresponding pattern.

5. The abnormality sensing and vehicle tracking apparatus according to claim 4, comprising:
an in-vehicle telephone set (11) which is capable of performing wireless communication via a public telephone line; and
a communication control unit (12) which is capable of giving notice to the outside that the vehicle is in an abnormal state by use of the in-vehicle telephone set (11) when it is determined by the abnormal state determining means (15) that the vehicle is in an abnormal state.

6. The abnormality sensing and vehicle tracking apparatus according to claim 4 or 5, wherein one of the predetermined patterns is that it is repeated three times that vibrations over a predetermined value are sensed once within five minutes after first sensing vibrations over the predetermined value.

7. The abnormality sensing and vehicle tracking apparatus according to claim 4 or 5, wherein one of the predetermined patterns is that it is repeated twice that vibrations over a predetermined value are sensed once for a time from five minutes to ten minutes after first sensing vibrations over the predetermined value.

8. The abnormality sensing and vehicle tracking apparatus according to claim 4 or 5, wherein one of the predetermined patterns is that vibrations over a predetermined value are sensed continuously for ten minutes or more.

## Patentansprüche

1. Anomaliedetektions- und Fahrzeugverfolgungsvorrichtung (10), welche eine Funktion zum Detektieren eines anomalen Zustands eines Fahrzeugs basierend auf einer von einem Spannungssensor detektierten Batteriespannung einer Bordbatterie (63) und eine Fahrzeugverfolgungsfunktion hat, wobei die Vorrichtung umfasst:
eine interne Leistungszufuhr (66), welche die Anomaliedetektions- und Fahrzeugverfolgungsvorrichtung (10) aktiviert;
Batteriespannungsdetektionsmittel (32) zum Detektieren der Batteriespannung; und
Betriebsmodusumschaltmittel (17) zum Umschalten eines Betriebsmodus der Anomaliedetektions- und Fahrzeugverfolgungsvorrichtung (10) in einen Diebstahlalarmmodus (M11), in welchem wenigstens Warnmittel (40) aktiviert werden, wenn bestimmt wird, dass sich das Fahrzeug (1) in einem anomalen Zustand basierend auf der detektierten Batteriespannung befindet, wobei
die Betriebsmodusumschaltmittel (17) den Betriebsmodus in den Diebstahlalarmmodus (M11) gemäß einem Spannungsniveauabfall der Batterie umschalten, wenn ein Zündschalter (60), welcher eine Hauptleistungszufuhr des Fahrzeugs (1) ein- und ausschaltet, ausgeschaltet wird;
wobei die Anomaliedetektions- und Fahrzeugverfolgungsvorrichtung (10)
**dadurch gekennzeichnet ist, dass** in einem Fall, in welchem die Batteriespannung auf eine vorgegebene Spannung oder weniger innerhalb einer vorgegebenen Zeit verringert wird, nachdem der Zündschalter (60), welcher die Hauptleistungszufuhr des Fahrzeugs (1) ein- und ausschaltet, ausgeschaltet wird, wobei die Betriebsmodusumschaltmittel (17) nicht bestimmen, dass sich das Fahrzeug (1) in einem anomalen Zustand befindet, und andererseits, in einem Fall, in welchem die Batteriespannung auf eine vorgegebene Spannung oder weniger verringert wird, nachdem eine vorgegebene Zeit verstrichen ist und eine Reduktionsrate der Batteriespannung höher als oder gleich einem vorbestimmten Wert ist, die Betriebsmodusumschaltmittel (17) bestimmen, dass sich das Fahrzeug (1) in einem anomalen Zustand befindet, und den Betriebsmodus in den Diebstahlalarmmodus (M11) umschalten.

2. Anomaliedetektions- und Fahrzeugverfolgungsvorrichtung nach Anspruch 1, wobei in einem Fall, in dem die Batteriespannung auf eine vorgegebene Spannung oder weniger verringert wird, nachdem eine vorgegebene Zeit verstrichen ist und eine Reduktionsrate der Batteriespannung kleiner als der vorgegebene Wert ist, die Betriebsmodusumschaltmittel (17) bestimmen, dass sich das Fahrzeug (1) nicht in einem anomalen Zustand befindet, und den Betriebsmodus nicht umschalten.

3. Anomaliedetektions- und Fahrzeugverfolgungsvorrichtung nach Anspruch 1 oder 2, umfassend die interne Leistungszufuhr (66), welche bewirkt, dass die Anomaliedetektions- und Fahrzeugverfolgungsvorrichtung (10) kontinuierlich angetrieben wird, wenn die Batteriespannung der Bordbatterie (63) auf einen vorgegebenen Wert oder weniger verringert wird.

4. Anomaliedetektions- und Fahrzeugverfolgungsvorrichtung nach Anspruch 1, welche einen anomalen Zustand des Fahrzeugs (1) detektiert, wobei die Anomaliedetektionsmittel einen Vibrationssensor (30) umfassen, welcher auf das Fahrzeug (1) ausgeübte Vibrationen detektiert und ferner eine Fahrzeugverfolgungsfunktion aufweist, wobei die Vorrichtung umfasst:
Messmittel (27) zum Messen eines Detektionsintervalls und der Vibrationsdetektionshäufigkeit; und
Anomaler-Zustand-Detektionsmittel (15) zum Detektieren eines anomalen Zustands des Fahrzeugs (1) basierend auf einem Ausgangssignal von dem Vibrationssensor (30), wobei
die Anomaler-Zustand-Detektionsmittel (15) eine Mehrzahl von vorgegebenen Mustern speichern, welche aus Kombinationen von Detektionsintervallen und Vibrationsdetektionshäufigkeiten zusammengesetzt sind und einen anomalen Zustand des Fahrzeugs (1) gemäß einem entsprechenden Muster bestimmen.

5. Anomaliedetektions- und Fahrzeugverfolgungsvorrichtung nach Anspruch 4, umfassend:
ein Bordtelefon (11), welches in der Lage ist, eine drahtlose Kommunikation über eine öffentliche Telefonleitung durchzuführen; und
eine Kommunikationsregelungs-/-steuerungseinheit (12), welche in der Lage ist, eine Meldung nach außen abzugeben, dass sich das Fahrzeug in einem anomalen Zustand befindet, indem das Bordtelefon (11) verwendet wird, wenn von dem Anomaler-Zustand-Detektionsmitteln (15) bestimmt wird, dass sich das Fahrzeug in einem anomalen Zustand befindet.

6. Anomaliedetektions- und Fahrzeugverfolgungsvorrichtung nach Anspruch 4 oder 5, wobei eines von den vorgegebenen Mustern darin besteht, dass es dreimal wiederholt wird, wenn Vibrationen über einem vorgegebenen Wert einmal innerhalb von fünf Minuten detektiert werden, nachdem Vibrationen über dem vorgegebenen Wert zuerst detektiert werden.

7. Anomaliedetektions- und Fahrzeugverfolgungsvorrichtung nach Anspruch 4 oder 5, wobei eines von den vorgegebenen Mustern darin besteht, dass es zweimal wiederholt wird, wenn Vibrationen über einem vorgegebenen Wert während einer Zeitdauer von fünf Minuten bis zehn Minuten detektiert werden, nachdem Vibrationen über dem vorgegebenen Wert zuerst detektiert werden.

8. Anomaliedetektions- und Fahrzeugverfolgungsvorrichtung nach Anspruch 4 oder 5, wobei eines von den vorgegebenen Mustern darin besteht, dass Vibrationen über einem vorgegebenen Wert kontinuierlich für zehn Minuten oder länger detektiert werden.

## Revendications

1. Dispositif de détection d'anomalies et de suivi de véhicule (10) ayant une fonction qui détecte un état anormal d'un véhicule d'après une tension de batterie d'une batterie embarquée (63) mesurée par un capteur de tension, et une fonction de suivi de véhicule, le dispositif comprenant :
une alimentation électrique interne (66) qui active le dispositif de détection d'anomalies et de suivi de véhicule (10) ;
un moyen de mesure de tension de batterie (32) pour mesurer la tension de batterie ; et
un moyen de commutation de mode de fonctionnement (17) pour faire passer un mode de fonctionnement du dispositif de détection d'anomalies et de suivi de véhicule (10) à un mode d'alarme antivol (M11) dans lequel au moins un moyen d'alarme (40) est activé quand il est déterminé que le véhicule (1) est dans un état anormal d'après la tension de batterie mesurée, dans lequel
le moyen de commutation de mode de fonctionnement (17) fait passer le mode de fonctionnement sur le mode d'alarme antivol (M11) selon une chute du niveau de la tension de batterie quand un interrupteur d'allumage (60) qui met en marche et arrête une alimentation électrique principale du véhicule (1) est mis sur arrêt ;
le dispositif de détection d'anomalies et de suivi de véhicule (10) étant **caractérisé en ce que**, dans le cas où la tension de batterie est réduite à une tension prédéterminée ou inférieure en un temps prédéterminé après que l'interrupteur d'allumage (60) qui met en marche et arrête l'alimentation électrique principale du véhicule (1) est mis sur arrêt, le moyen de commutation de mode de fonctionnement (17) ne détermine pas que le véhicule (1) est dans un état anormal, et d'autre part, dans le cas où la tension de batterie est réduite à la tension prédéterminée ou inférieure après l'écoulement d'un temps prédéterminé, et où une vitesse de réduction de la tension de batterie est supérieure ou égale à une valeur prédéterminée, le moyen de commutation de mode de fonctionnement (17) détermine que le véhicule (1) est dans un état anormal, et fait passer le mode de fonctionnement sur le mode d'alarme antivol (M11).

2. Dispositif de détection d'anomalies et de suivi de véhicule selon la revendication 1, dans lequel, dans le cas où la tension de batterie est réduite à la tension prédéterminée ou inférieure après l'écoulement d'un temps prédéterminé, et où une vitesse de réduction de la tension de batterie est inférieure à la valeur prédéterminée, le moyen de commutation de mode de fonctionnement (17) détermine que le véhicule (1) n'est pas dans un état anormal, et ne change pas le mode de fonctionnement.

3. Dispositif de détection d'anomalies et de suivi de véhicule selon la revendication 1 ou 2, dans lequel l'alimentation électrique interne (66) provoque l'entraînement du dispositif de détection d'anomalies et de suivi de véhicule (10) en continu quand la tension de la batterie embarquée (63) est réduite à une valeur prédéterminée ou inférieure.

4. Dispositif de détection d'anomalies et de suivi de véhicule selon la revendication 1 qui détecte un état anormal du véhicule (1) avec un moyen de détection d'anomalies comprenant un capteur de vibrations (30) qui mesure les vibrations appliquées au véhicule (1), et comporte en outre une fonction de suivi de véhicule, le dispositif comprenant :
un moyen de mesure (27) pour mesurer un intervalle de détection et le nombre de détections des vibrations ; et
un moyen de détermination d'état anormal (15) pour déterminer un état anormal du véhicule (1) d'après un signal de sortie provenant du capteur de vibrations (30), dans lequel
le moyen de détermination d'état anormal (15) mémorise une pluralité de motifs prédéterminés qui sont composés de combinaisons d'intervalles de détection et de nombres de détections des vibrations, et détermine un état anormal du véhicule (1) selon un motif correspondant.

5. Dispositif de détection d'anomalies et de suivi de véhicule selon la revendication 4, comprenant :
un ensemble de téléphone embarqué (11) qui est apte à réaliser des communications sans fil via une ligne téléphonique publique ; et
une unité de commande de communication (12) qui est apte à signaler à l'extérieur que le véhicule est dans un état anormal en utilisant l'ensemble de téléphone embarqué (11) quand il est déterminé par le moyen de détermination d'état anormal (15) que le véhicule est dans un état anormal.

6. Dispositif de détection d'anomalies et de suivi de véhicule selon la revendication 4 ou 5, dans lequel l'un des motifs prédéterminés est qu'il est répété trois fois que les vibrations au-dessus d'une valeur prédéterminée sont détectées une fois au cours des cinq minutes qui suivent la première détection de vibrations au-dessus de la valeur prédéterminée.

7. Dispositif de détection d'anomalies et de suivi de véhicule selon la revendication 4 ou 5, dans lequel l'un des motifs prédéterminés est qu'il est répété deux fois que les vibrations au-dessus d'une valeur prédéterminée sont détectées une fois pendant un intervalle de cinq minutes à dix minutes après la première détection de vibrations au-dessus de la valeur prédéterminée.

8. Dispositif de détection d'anomalies et de suivi de véhicule selon la revendication 4 ou 5, dans lequel l'un des motifs prédéterminés est que les vibrations au-dessus d'une valeur prédéterminée sont détectées en continu pendant dix minutes ou plus.
